# EUROPÄISCHE PATENTSCHRIFT

(11) **EP 4 188 735 B1**
(45) Veröffentlichungstag und Bekanntmachung des Hinweises auf die Patenterteilung: **17.04.2024**
(21) Anmeldenummer: 21789638.0
(22) Anmeldetag: 04.10.2021
(51) Int. Cl.: B60K 11/08

(54) **LUFTFÜHRUNGSSTEUERUNG FÜR EIN KRAFTFAHRZEUG**
AIR GUIDANCE CONTROL UNIT FOR A MOTOR VEHICLE
DISPOSITIF DE COMMANDE DE GUIDAGE D'AIR POUR VÉHICULE À MOTEUR

(30) Priorität: 02.10.2020 DE 102020125891
(43) Veröffentlichungstag der Anmeldung: 07.06.2023
(73) Patentinhaber: Montaplast Gesellschaft mit beschränkter Haftung, 51597 Morsbach (DE)
(72) Erfinder: PÜTZ, Andreas, 53804 Much (DE); EWERT, Andreas, 51545 Waldbröl (DE); SCHWEGMANN, Sebastian, 53797 Lohmar (DE); MÜLLER, Johannes, 51545 Waldbröl (DE); MIKA, Frank, 51588 Nümbrecht (DE)
(74) Vertreter: Bobzien, Hans Christoph
(86) Internationale Anmeldenummer: PCT/EP2021/077292
(87) Internationale Veröffentlichungsnummer: WO 2022/069766

(56) Entgegenhaltungen:
- EP-A1- 0 206 299
- WO-A2-2012/047528
- CN-A- 107 160 997
- CN-A- 109 969 113
- CN-U- 209 479 413
- DE-A1- 10 306 158
- DE-A1-102012 000 173
- DE-A1-102014 104 041
- DE-A1-102018 124 572
- DE-A1-102018 218 570
- DE-U1-202011 050 032
- US-B1- 9 827 847
- US-B2- 10 202 049

## Beschreibung

Luftführungssteuerung mit einem Rahmen, der mindestens eine Luftöffnung zum Hindurchströmen von entlang einer Luftströmungsrichtung strömender Luft umgibt, einer verstellbare Klappen umfassende Verschlussvorrichtung, die zwischen einer die Luftöffnung freigebenden Öffnungsstellung und einer die Luftöffnung zumindest teilweise verschließenden Schließstellung mittels einer Verstellvorrichtung verstellbar ist zur selektiven Freigabe und zum Verschließen der Luftöffnung für die Realisierung eines Thermo-Managements in einem in Luftströmungsrichtung nachgelagerten KFZ-Aggregats, insbesondere eines Kühlers, z.B. eines Wasserkühlers eines Verbrennungsmotors oder eines Kühlers für eine Bremse, Batterie oder dergleichen.

Die Erfindung beschäftigt sich im weitesten Sinne mit einer Vorrichtung für das Thermo-Management eines Aggregats, insbesondere einer Vorrichtung, die in oder hinter einem Rahmen bzw. einem Kühlergrill eines Kraftfahrzeugs, vorzugsweise an dessen Vorderende angeordnet werden kann und wobei über die Verschlussvorrichtung der Luftstrom des Fahrtwinds durch den Rahmen definierte bzw. aufgespannte Ebene reguliert werden kann, indem die Verschlussvorrichtung in oder hinter dem Rahmen die mindestens eine Luftöffnung selektiv Öffnen oder Verschließen kann.

Eine solche Luftführungssteuerung wird mitunter auch als "Active Grill Shutter" bezeichnet, weil diese am Vorderende eines Kraftfahrzeugs unmittelbar hinter oder integriert in einen Kühlergrill oder Kühlergitter eines Kraftfahrzeugs angeordnet ist.

Die Luftöffnung kann also wahlweise in Abhängigkeit von der Motorleistung durch die Verschlussvorrichtung verschlossen werden.

Der Rahmen spannt also eine Rahmenebene auf, die von dem Rahmen umfänglich umschlossen ist und gleichzeitig die Luftöffnung definiert. Die Luftöffnung ist durch die Verschlussvorrichtung je nach Leistung des KFZ-Aggregats selektiv öffnen- und verschließbar oder auch zur Veränderung des Luftwiderstandes. Geschlossen wird die Luftführungsteuerung z.B. für die schnellere Erwärmung des Motors in der Startphase und geöffnet wird die Luftführungsteuerung unter Volllast zur besseren Kühlung des Motors.

Als Verschlussvorrichtung kommen Rollosysteme mit einem auf- und abwickelbaren Rollo sowie antreibbare Einzelklappen zum Einsatz. Das Rollo wird auf eine antreibbare Welle ab- und aufgewickelt zwischen der auf die Welle aufgewickelten Öffnungsstellung und der abgewickelten Schließstellung.

Ein solches Rollosystem ist beispielsweise aus der DE 10 2017 211 577 A1 bekannt.

Die Klappen umfassen mehrere, drehbar über- oder nebeneinander in dem Rahmen angeordnete Klappen mit einer sich quer zur Fahrrichtung ersteckenden Klappenlängsachse, die jeweils drehbar in dem Rahmen aufgenommen ist und Klappenflächen umfasst. Die Klappen können aus der geschlossenen Schließstellung, in welcher sich die Klappenflächen im Wesentlichen quer zur Fahrtrichtung erstrecken in eine Öffnungsstellung um ihre jeweilige Klappenlängsachse gedreht werden, in welcher sich die Klappenfläche ganz oder teilweise parallel zur Fahrtrichtung erstreckt.

Eine solche Klappenanordnung ist beispielsweise aus der WO 2012/047 528 A2 und EP 2 855 185 B1 bekannt.

Stand der Technik anderer Art ist offenbart in DE 10 2018 124 572 A1, US 10 202 049 B2, CN 109 969 113 A, CN 209 479 413 U, DE 10 218 218 570 und US 9 827 847.

### Nachteile am Stand der Technik

Zur Regulierung des Lufteintritts wird bei bekannten Rollosystemen eine Abdeckung, beispielsweise über einen Seilzug, angetrieben, um so die Öffnungen des Kühlergrills verschließen bzw. freigeben zu können. Nachteilhaft ist hierbei, dass das Aufrollen in einer Richtung verläuft und somit einen längeren Weg zum Freigeben der Luftzufuhr benötigt.

Weitere Nachteile zeigen sich bei bekannten Rollosystemen dadurch, wo die Abdeckung beispielsweise über einen Seilzug, angetrieben wird, um so die Öffnungen des Kühlergrills zu verschließen bzw. freizugeben. Seilzüge könnten hier nachteilig sein, da sie über Umlenkrollen laufen müssen und somit schneller verschleißen, verkanten oder aus der Führung springen können und die Regulierung der Kühlung aussetzt, somit zu enormen Schäden des Fahrzeuges bzw. des Motors aufgrund einer unzureichenden Kühlung führen kann. Dadurch wird eine Klimatisierung des Fahrzeugs mit Frischluft behindert.

Insgesamt sind die Systeme recht voluminös, so dass sich diese schwerer in den beengten Bauraum in modernen Motoren integrieren lassen.

### Aufgabe

Aufgabe der Erfindung ist es, die Nachteile aus dem Stand der Technik zumindest teilweise zu vermeiden und insbesondere eine kostengünstige, verlässliche und kompakte Luftführungssteuerung vorzusehen.

### Erfindung

Die Erfindung löst diese Aufgabe durch die Merkmale der unabhängigen Ansprüche. Vorteilhafte, aber nicht zwingende Merkmale sind in den Unteransprüchen wiedergegeben.

Eine nicht von den Ansprüchen umfasste Lösung ist schlagwortartig beschreibbar als "Dreifachklappe mit Kulissenführung". Diese zeichnet sich dadurch aus, dass die Klappen eine Klappenanordnung mit zwei drehbar miteinander verbundenen Teil-Klappen umfasst, dass jede Teil-Klappe eine sich entlang einer Plattenlängsachse erstreckende Klappenfläche aufweist, welche begrenzt ist durch Teil-Klappenlängsseiten und Teilklappen-stirnseiten, dass die Teilklappen-Stirnseiten kürzer ausgebildet sind als die Teilklappen-Längsseiten, sodass die Teil-Klappen der Klappenanordnung also an den Teilklappen-Längsseiten drehbar miteinander verbunden sind, dass an den Teilklappen-Stirnseiten jeweils drei in Richtung der KlappenLängsachse abragende und zueinander beabstandete Stifte ausgebildet sind, die sich kollinear zu an der gegenüberliegenden Teilklappen-Stirnseite ausgebildeten Stiften erstrecken, dass an jeder Teilklappen-Stirnseite ein Mittelstift und zwei außenseitig von diesem gelegene Außenstifte ausgebildet sind, dass der Mittelstift als Antriebsstift fungieren und kollinear zu einer die Teilklappen an den einander zugewandten Teilklappen-Längsseiten drehbar miteinander verbindenden Drehachse ausgebildet ist, dass die beiden gegenüberliegenden Mittelstifte in koplanar (in einer Ebene erstreckend) ausgebildeten Horizontal-Langlöcher einer Antriebsführung verschieblich einsetzbar sind, und dass die Außenstifte der beiden Teil-Klappen in vertikalen Langlöchern verschieblich einsetzbar sind, die an einem in der Luftströmungsrichtung hinteren Ende der Horizontal-Langlöcher im Wesentlichen in einem rechten Winkel von diesem jeweils Weg erstreckend ausgebildet sind.

Vereinfacht können die kollinear mittig an der Drehachse zwischen den schwenkbar miteinander verbundenen Teil-Klappen ausgebildeten Mittelstifte als Antriebsstifte oder Antriebsdome eingesetzt werden, die in einer ersten Richtung, vorzugsweise einer Horizontal-Richtung in Einbaulage erstreckend aus einer vorderen Position in eine hintere Position verschoben werden. Beim Verschieben dieser Antriebsstifte in den Horizontal-Langlöchern werden die an den Teilklappen außenseitig vorgesehenen Außenstifte, also an den äußeren Teil-Klappen-Längsseiten ausgebildeten Außenstifte in den in dem Winkel zu den Horizontal-Langlöchern erstreckenden vertikal-Langlöchern geführt, sodass die Klappenanordnung aus der nach vorne gezogenen Öffnungsstellung, in welcher die beiden Teilklappen gegeneinander zusammengelegt sind, in die nach hinten angeordnete Schließstellung verstellbar sind, in welcher die beiden Teilklappen auseinander gefaltet sind, also eine gesamte Klappenebene in einer Ebene zum Schließen der der Luftöffnung bilden.

Eine andere, ebenfalls nicht von den Ansprüchen umfasste Ausführungsform, welche schlagwortartig unter dem Schlagwort "Klappenanordnung mit Zahnradverbindung" zusammenfassbar ist, ist dadurch gekennzeichnet, dass die Verschlussvorrichtung eine Klappenanordnung mit zwei oder mehrere drehbar miteinander verbundenen Klappen umfasst, wobei jede Klappe eine sich entlang einer Klappenlängsachse erstreckende Klappenfläche aufweist, welche durch diese begrenzende Klappen-Längsseiten und Klappen- Stirnseiten eingegrenzt oder eingefasst ist, dass die Klappen-Stirnseiten kürzer ausgebildet sind als die Klappen-Längsseiten, dass an den Klappen-Stirnseiten sich koaxial zu einer sich entlang der Klappenlängsachse erstreckenden KlappenDrehachse Stifte, Zapfen oder ähnliches ausgebildet zum drehbaren Einsetzen in den Rahmen oder einen Halter umfassen, und dass an mindestens einem Stirnende der Klappen um die Klappen-Drehachsen herum angeordnete und in Einbaulage ineinander eingreifende Klappen-Zahnräder vorgesehen sind.

Eines dieser Klappen-Zahnräder ist über einen Aktuator, vorzugsweise einen Elektromotor angetrieben, sodass die Klappen um ihre jeweilige Klappenlängsachse herum aus der die Luftöffnungen verschließenden Schließstellung, in welcher sich die Klappenflächen im Wesentlichen in der Ebene oder parallel zur Ebene der Luftöffnung erstrecken, also quer erstreckend zur Luftströmungsrichtung angeordnet sind, in die die Luftöffnung freigegebene Öffnungsstellung bewegbar sind, in welcher sich die Klappenflächen im Wesentlichen parallel zur Luftströmungsrichtung erstrecken, also quer zur Fläche der Luftöffnung erstrecken. Die erfindungsgemäße Lösung lässt sich unter dem Schlagwort Faltklappe-Verschiebetechnik zusammenfassen. Bei dieser Lösung umfasst die Verschlussvorrichtung eine Klappenanordnung mit drei drehbar oder schwenkbar an den angrenzenden Klappenlängsseiten miteinander verbundenen Klappen, nämlich einer Mittelklappe und zwei diese außenseitig einfassenden Außenklappen. Vorzugsweise ist die drehbare/schwenkbare Verbindung nach Art eines Scharniers aufgebaut und umfasst einen Schwenkstift an einem Fügepartner und eine korrespondierende Buchse zur Aufnahme des Schwenkstifts an dem korrespondierenden anderen Fügepartner.

Jede Klappe der Klappenanordnung weist wieder eine sich entlang einer Klappenlängsachse erstreckende Klappenfläche auf, welche durch diese begrenzende Klappenlängsseiten und Klappenstirnseiten eingegrenzt ist. Die Klappenstirnseiten sind wiederrum kürzer ausgebildet als die Klappenlängsseiten.

Die Mittelklappe weist eine sich durch die Mitte der Mittelklappenfläche erstreckende Drehachse auf und die Stifte der Mittelklappe sind als "Rotationsstifte" oder "Drehstifte" ausgebildet, die sich koaxial erstreckend zur Drehachse der Mittelklappenfläche erstreckend von den Stirnseiten der Mittelklappe abstehen. Diese Rotationsstifte sind antreibbar, vorzugsweise über einen Aktuator, weshalb man Sie auch als Antriebstifte bezeichnen kann.

Von den Stirnseiten der Außenklappen ragen hingegen vorzugsweise koaxial zueinander abragende Stifte ab, die verschieblich in Führungsbahnen eines Fügepartners geführt sind und deshalb als "Führungsstifte" bezeichnet werden. Diese Führungsstifte der Außenklappen erstrecken sich jedoch nicht koaxial zur Mittellängsachse der Außenklappen, sondern sind von der Mittelängsachse der Außenklappen nach außen versetzt, vorzugsweise fast ganz bis zur Klappenlängsseite, die der Längsseite ausgebildet zur drehbaren Verbindung mit der angrenzenden Mittelklappe gegenüber liegt, hier als distale "Außenklappenlängsseite" bezeichnet. Diese Führungsstifte der Außenklappen sind in Kulissenführungen des Rahmens oder einer in den Rahmen einsetzbaren Halteanordnung verschieblich geführt.

Vorzugsweise sind diese Kulissenführungen zur Realisierung einer besonders harmonischen Bewegung bogenförmig ausgebildet, insbesondere in der Form eines Kreisbogensegments, welches sich um die Drehachse erstreckt, welche die aneinander angrenzenden Klappen an der Klappenlängsseiten drehbar miteinander verbindet.

An den Klappenstirnseiten sind also außenseitig abragende Außenstifte an dem von der gemeinsamen Klappendrehachse abgewandten Ende der Klappenstirnseiten vorgesehen, die als Führungsstifte fungieren.

Die Drehstifte der Mittelklappe sind über einen Aktuator, insbesondere einen Elektromotor antreibbar ausgebildet und die Führungsstifte der Außenklappen sind in vorzugsweise bogenförmig ausgebildeten Kulissenführungen des Rahmens oder einer in den Rahmen einsetzbaren Halteanordnung verschieblich geführt.

Werden die Rotationstifte der Mittelklappe gedreht, so bewirkt die drehbare Verbindung der Mittelklappe mit den Außenklappen an den aneinander drehbaren Klappenlängsseiten eine Drehung der Außenklappen um diese Drehverbindung mit der Mittelklappe in Klappenlängsrichtung. Dabei werden die Führungsstifte der Au-ßenklappen durch Ihren Versatz in den komplementären Kulissenführungen so geführt, dass die Außenklappen sich je nach Drehrichtung der Mittelklappe entweder an die Mittelklappe anlegen (Öffnungsstellung) oder von dieser weg bewegen (Schließstellung).

Außerdem können eine oder mehrere Rahmen mit Klappenanordnungen vorgesehen sein, wobei vorzugsweise die Klappenanordnung für jeden Rahmen einzeln steuerbar ist. Alternativ können auch mehrere Klappenanordnungen für mehrere Rahmen oder mehrere Luftöffnungen gleichzeitig gesteuert werden, z.B. mehrere Luftöffnungen in einem Kühlergrill über Aktuator und verbunden mit einem Koppelglied.

Die Klappenanordnungen können direkt in dem Rahmen bzw. mehrere Rahmen umfassenden Kühlergrill eingesetzt werden bzw. sind in diesen einsetzbar. Insofern muss der Rahmen nicht notwendigerweise vorhanden sein. Es reicht vielmehr aus, dass die Klappen umfassende Verschlussvorrichtung in einem Rahmen einsetzbar, vorzugsweise einschnappbar ist.

In den Rahmen oder eine Luftöffnung einsetzbare Ausführungsformen umfassen vorzugsweise plattenartig ausgebildete, als Seitenlager fungierende Stirnklappenhalter, bisweilen auch als Kassettenmodule bezeichnet, in welche die Klappenstirnenden einsetzbar sind, insbesondere mehrere Klappen jalousieartig über- oder nebeneinander, welche dann als Baugruppe umfassend zwei seitliche Seitenlager und die sich dazwischen erstreckende Klappenanordnung in den Rahmen oder die Luftöffnungen eingesetzt werden kann.

Alle Lösungen können entweder direkt in dem Rahmen mit der mindestens einen, vorzugsweise mehreren Luftöffnungen ausgebildet sein, sodass in jeder Luftöffnung eine derartige Klappenanordnung angeordnet ist, sodass auch die Klappenanordnungen in verschiedenen Luftöffnungen über einen gemeinsamen Aktuator antreibbar sind.

Daneben betrifft die Erfindung eine KFZ-Baugruppe umfassend eine Klappenanordnung, insbesondere ein Kühlergitter oder eine Aufnahme für die Klappenanordnung sowie eine der Klappenanordnung in einer Luftströmungsrichtung nachgelagerten Aggregats, insbesondere eines Kühlers, zu dem die Luftströmung über die Klappenanordnung geregelt werden kann, z. B. eines Kühlers für eine Bremse, eine Batterie oder einen Verbrennungsmotor.

Insofern betrifft die Erfindung auch eine KFZ-Anordnung / KFZ-Baugruppe umfassend eine oder mehrere der zuvor beschriebenen Klappenanordnungen zur Realisierung einer Luftführungssteuerung durch eine Luftöffnung sowie ein in Luftströmungsrichtung nachgelagertes von der Luft umströmtes Aggregat, insbesondere einen Kühler. Vorzugsweise kann zwischen der Luftöffnung und dem Aggregat eine vorzugsweise als Luftkanal ausgebildete Luftleitung vorgesehen sein, welche die Luft von der Luftöffnung zu dem Aggregat führt.

Bevorzugt sind die Klappenanordnungen und die KFZ-Anordnung ganz oder teilweise als Kunststoffteile, insbesondere als kostengünstig und in hoher Qualität in der Serienfertigung herstellbare Kunststoffspritzgussteile ausgebildet.

Der Rahmen, in den die Klappenanordnung angeordnet ist, kann entweder einteilig ausgebildet sein oder mehrteilig aus insbesondere zwei Halbschalen bestehen, wobei zur Vereinfachung der Montage die Klappen der Klappenordnung vorzugsweise in eine erste Halbschale eingesetzt werden und sodann die zweite Halbeschale mit der ersten Halbschale verbunden wird, vorzugsweise unlösbar.

Somit betrifft die Erfindung auch einen Rahmen umfassend die Klappenanordnung, die als Bauteil insbesondere in ein verbaut werden kann, insbesondere in ein vorderseitiges Kühlergitter zur Regelung der Luftsteuerung oder Verbesserung des Luftwiderstands.

Weitere Merkmale und Vorteile der vorliegenden Erfindung werden deutlich anhand der nachfolgenden Figurenbeschreibung bevorzugter Ausführungsbeispiele unter Bezugnahme auf die beiliegenden Abbildungen.

In dieser Hinsicht wird Richtungsterminologie wie etwa "oben", "unten", "vorne", "hinten", "vorderes", "hinteres", usw. in Bezug auf die Orientierung der beschriebenen Figur(en) verwendet. Da Komponenten von Ausführungsformen in einer Anzahl verschiedener Orientierung positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Die folgende ausführliche Beschreibung ist nicht im einschränkenden Sinne, aber definiert durch den Gegenstand der Ansprüche aufzufassen.

Im Rahmen dieser Beschreibung werden die Begriffe "verbunden", "angeschlossen" sowie "integriert" verwendet zum Beschreiben sowohl einer direkten als auch einer indirekten Verbindung, eines direkten oder indirekten Anschlusses sowie einer direkten oder indirekten Integration. In den Figuren werden identische oder ähnliche Elemente mit identischem Bezugszeichen versehen, soweit dieses zweckmäßig ist.

Die Darstellungen in den Figuren sind im Wesentlichen maßstäblich. Zur Veranschaulichung von Details können jedoch bestimmte Bereiche für den Fachmann erkennbar übertrieben groß dargestellt sein. Darüber hinaus können die Zeichnungen plakativ vereinfacht sein und enthalten nicht jedes bei der praktischen Ausführung gegebenenfalls vorhandene Detail.

Sofern nicht anders angegeben, beziehen sich der unbestimmte Artikel und der bestimmte Artikel nicht nur auf ein einzelnes Bauteil, sondern sind zu verstehen als "mindestens eins". Die Terminologie umfasst die zuvor genannten Worte, Abwandlungen davon sowie ähnliche Bedeutungen. Ferner sollte verstanden werden, dass die Begriffe "etwa", "im Wesentlichen" und ähnliche Begriffe in Verbindung mit den Dimensionen und einer Eigenschaft einer Komponente der Erfindung die beschriebene Dimension und Eigenschaft nicht als strikte Grenze oder Parameter beschreiben und geringfügige Abwandlungen davon nicht ausschließen, welche funktional ähnlich sind. Zumindest umfassen Beschreibungsteile mit numerischen Parametern auch Abwandlungen dieser Parameter gemäß den mathematischen und fertigungstechnischen Prinzipien im Stand der Technik, z.B. Rundungen, Abweichungen und andere systematische Fehler, Fertigungstoleranzen etc, sofern diese am Gegenstand der Ansprüche orientiert sind. Schließlich sind bei mehreren gleichen Bauteilen bzw. Elementen aus Gründen der Übersichtlichkeit nur jeweils eins mit einem Bezugszeichen versehen.

Sämtliche Merkmale der jeweiligen Ausführungsbeispiele seien hierbei unabhängig voneinander auch allgemein im Rahmen der Erfindung offenbart. Gleiche Bezugsziffern der Figuren beziehen sich auf gleiche Bauteile bzw. Merkmale. Es zeigen:
- Figur 1: eine isometrische Frontansicht der ersten, nicht von den Ansprüchen umfasste Ausführungsform (Faltklappe-Verschiebetechnik) in geschlossener Schließstellung;
- Figur 2: eine isometrische Ansicht eines Rahmens der Ausführungsform gemäß Figur 1;
- Figur 3: eine modular erweiterte Klappenanordnung der Ausführungsform Faltklappe-Verschiebetechnik gemäß

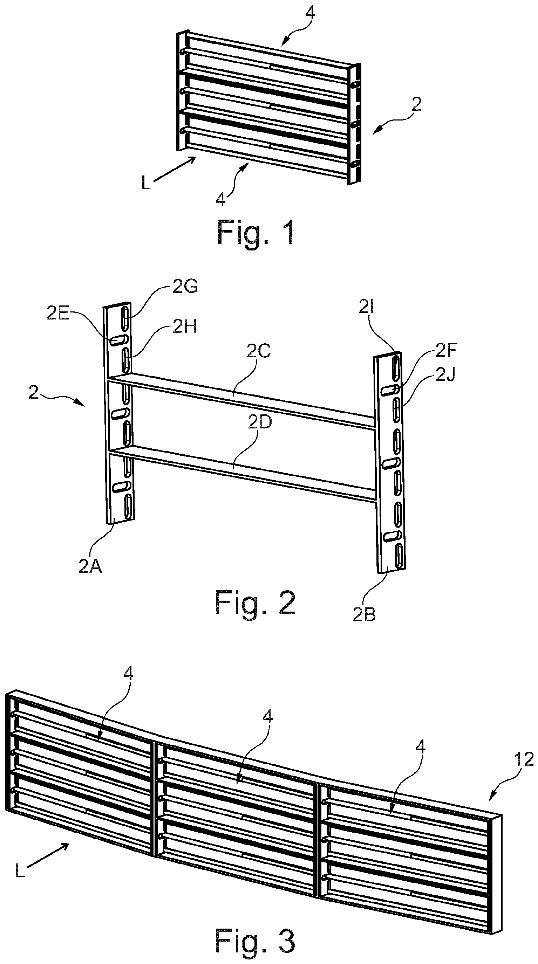

- Figur 1: umfassend drei in einem gemeinsamen Rahmen angeordnete Klappenanordnungen;

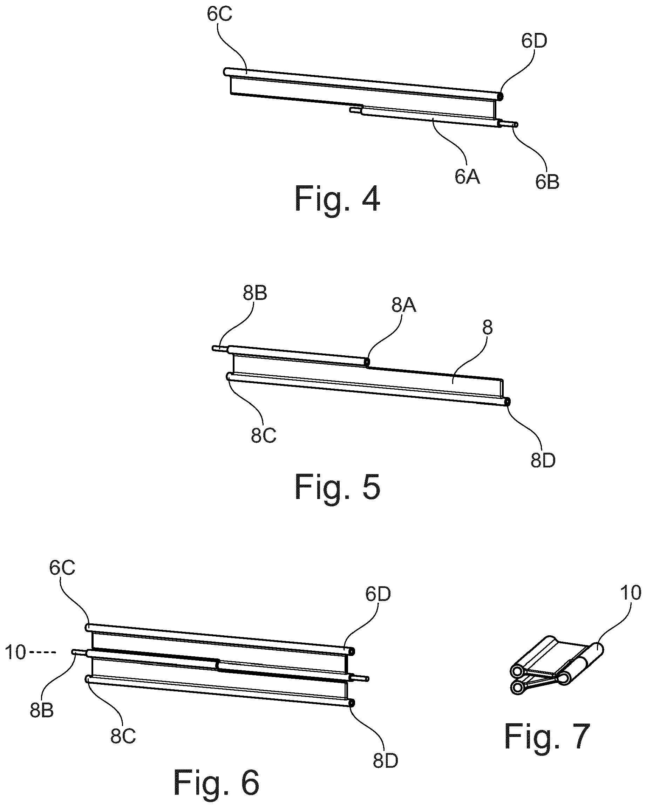

- Figur 4: eine isometrische Frontansicht einer ersten Teilklappe der Klappenanordnungen gemäß den Figuren 1-3;
- Figur 5: eine isometrische Frontansicht der zweiten Teilklappe der Klappenanordnung gemäß den Figuren 1-3;
- Figur 6: eine isometrische Frontansicht einer Klappenanordnung gemäß den Figuren 1 bis 3 in Schließstellung;
- Figur 7: eine isometrische Stirnansicht auf eine Klappe gemäß Figur 6 in Öffnungsstellung, also zusammengelegter Stellung;

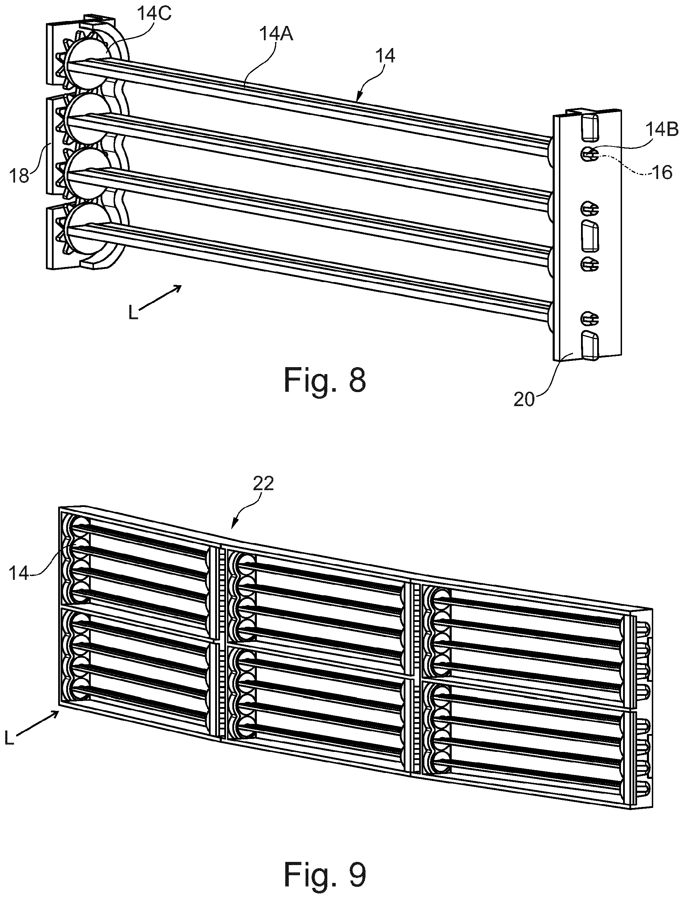

- Figur 8: eine isometrische Ansicht einer zweiten, nicht von den Ansprüchen umfasste Ausführungsform der Klappenanordnung (Klappenanordnung mit Zahnrädern);
- Figur 9: eine isometrische Frontansicht einer modular erweiterten Klappenanordnung mit Zahnrädern gemäß Figur 8;

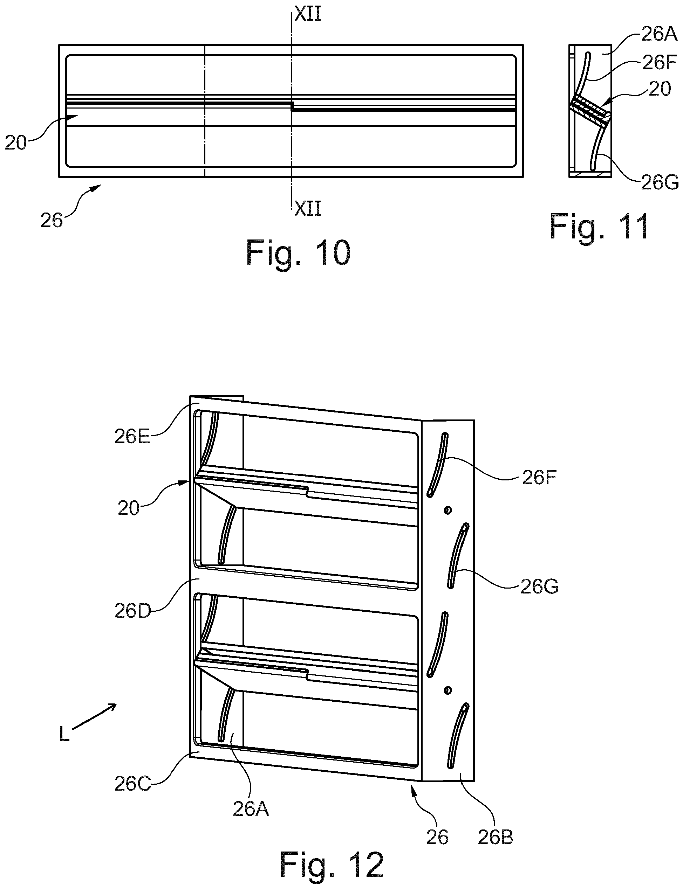

- Figur 10: eine Frontansicht der erfindungsgemäßen Ausführungsform der Klappenanordnung (Dreifachklapp-Kulissenführung) in Öffnungsstellung;
- Figur 11: einen Querschnitt der Klappenanordnung entlang der Linie XII - XII gemäß Figur 10;
- Figur 12: eine isometrische Frontansicht zweier in einem gemeinsamen Rahmen angeordneten Klappenanordnungen gemäß Figur 10;

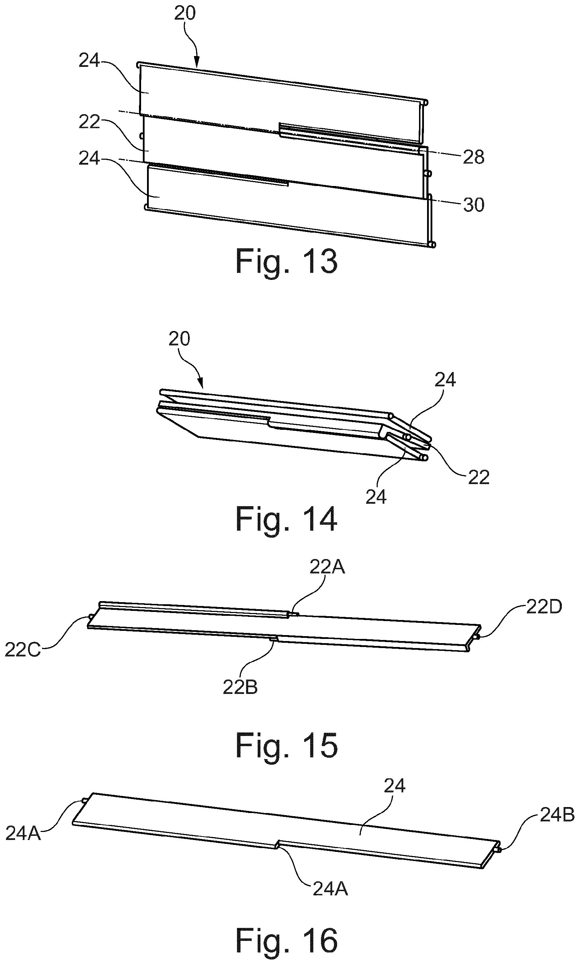

- Figur 13: eine isometrische Frontansicht einer Klappenanordnung gemäß Figur 10 in Schließstellung ohne Rahmen;
- Figur 14: eine isometrische Ansicht der Klappenanordnung gemäß Figur 13 in der zusammengelegten Öffnungsstellung;
- Figur 15: eine isometrische Ansicht einer Mittelklappe der Klappenanordnung gemäß Figur 14; und
- Figur 16: eine isometrische Ansicht einer Außenklappe gemäß der Klappenanordnung gemäß Figur 14.

Figur 1 zeigt also eine isometrische Ansicht einer geschlossenen Klappenanordnung 4 der nicht erfindungsgemäßen Ausführungsform Faltklappe-Verschiebetechnik umfassend einen H-förmigen Rahmen 2, der zwei Seitenvertikalstreben 2A, 2B sowie zwischen diesen Vertikalstreben 2A, 2B angeordnete und diese beabstandeten Horizontalstreben 2C, 2D. In den seitlichen Vertikalstreben 2A, 2B des Rahmens 2 sind die in der Figur 6 in der Schließstellung dargestellten Klappenanordnungen 4 umfassend zwei Teilklappen 6, 8 eingesetzt. In der Figur sind in den Rahmen 2 insgesamt drei jalousieartig übereinander angeordnete Klappenanordnungen 4 angeordnet.

Jede Klappenanordnung 4 umfasst eine erste Teilklappe 6 und eine zweite Teilklappe 8, die in einer mittleren Drehachse 10 schwenkbar miteinander verbunden sind und hierzu zwei komplementäre Verbindungsstücke an den einander zugewandten Teilklappenlängsseiten aufweisen. Die obere Teilklappe 6 weist an der einander zugewandten innenseitigen Teilklappenlängsseite etwa in der Hälfte erstreckend entlang der Teilklappenlängsseiten einen Doppelzapfen 6A auf, der einmal an der Teilklappenstirnseite über das Teilklappenstirnende hinausragt und etwa in der Mitte der Teilklappenlängsseite einen weiteren Stift aufweist, welcher in eine komplementär ausgebildete Lageröffnung 8A ausgebildet an der Teilklappenlängsseite der Teilklappe 8 drehbar einsteckbar ist. Koaxial erstreckend zu dieser Lageröffnung 8A ist die Teilklappe 8 an dem Klappenstirnende gegenüberliegend von der Lageröffnung 8A mit einem Mittelstift 8B ausgebildet. Auch der an der gegenüberliegenden Teilklappenstirnseite der Teilklappe 6 ausgebildete Doppelstift fungiert als solcher Mittelstift 6B. An den außenseitigen Teilklappenlängsseiten der Teilklappen 6, 8, welche also von der Drehachse 10 abgewandt sind, umfassen die Teilklappen jeweils etwas kürzere Außenstifte 6C, 6D, 8C, 8D.

In Einbaulage sitzen die Mittelstifte 6B, 8B koplanar in den Vertikalstreben 2A, 2B ausgebildeten Horizontal-Langlöchern 2E, 2F, in welchen diese entlang der Luftströmungsrichtung L verschieblich, also Längs verschieblich geführt sind. Gleichzeitig sitzen die Außenstifte 6C, 6D, 8C, 8D jeder Klappenanordnung 4 in Vertikal-Langlöchern 2G, 2H, 21, 2J, welche sich in der in Luftströmungsrichtung L am hinteren Ende der Horizontallanglöcher 2E, 2F in einem rechten Winkel von diesem jeweils nach außen erstreckend ausgebildet sind. Durch diese Ausgestaltung wird realisiert, dass bei einer Horizontalverschiebung der Mittelstifte 6B, 8B durch einen Aktuator, also einer Translationsbewegung, die Teilklappen 6, 8 der Klappenanordnung 4 beim nach vorne ziehen geöffnet und beim nach hinten schieben geschlossen werden.

Die Figur 1 zeigt eine Dreifachklappenanordnung mit drei Klappenanordnungen 4 übereinander in der Schließstellung.

Die Figur 3 zeigt einen modular erweiterten Rahmen 12, in welchen drei nebeneinander angeordnete Klappenanordnungen 4 der nicht erfindungsgemäßen Ausführungsform gemäß Figur 1 eingesetzt sind.

Dieser Rahmen 12 kann modular in beliebiger Weise in der Horizontalen und Vertikalen erweitert werden. Selbstverständlich ist diese Ausführungsform nicht auf zwei oder drei Klappenanordnungen 4 übereinander eingeschränkt.

Die Figuren 8 und 9 zeigen isometrische Ansichten der zweiten nicht erfindungsgemäßen Ausführungsform Klappenanordnung mit Zahnrädern. Wiederum umfasst die Klappenanordnungen vier Klappen 14, welche zusammen die Verschlussvorrichtung bilden und die zwischen einer eine Luftöffnungen freigegebenen Öffnungsstellung und einer die Luftöffnungen zumindest teilweise oder ganz verschließenden Schließstellung mittels einer Verstellvorrichtung, insbesondere eines Aktuators, vorzugsweise umfassend einen Elektromotor verstellbar sind zur selektiven Freigabe und zum Verschließen der Luftöffnung für das Thermomanagement eines in Luftströmungsrichtung L nachgelagerten Verbrennungsmotors.

Die Verschlussvorrichtung umfasst bei der vorliegenden nicht erfindungsgemäßen Ausführungsform jeweils vier Klappen 14, wobei jede Klappe 14 eine sich entlang einer Klappenlängsachse, die in diesem Fall gleichzeitig die Klappendrehachse 16 darstellt, erstreckende Klappenfläche 14A aufweist. Diese Klappenfläche 14A wird durch diese begrenzende Klappenlängsseiten und Klappenstirnenden eingegrenzt, wobei die Klappenstirnenden wiederum wesentlich kürzer ausgebildet sind als die Klappenlängsseiten, die Klappen also länglich, flügelartig ausgebildet sind.

An jeder der Klappenstirnenden sind koaxial erstrecken zu der Klappendrehachse 16 einer jeweiligen Klappe 14 Drehstifte 14B ausgebildet, die sich entlang der Klappenlängsachse nach außen an den Klappenstirnenden erstrecken. Diese stirnseitig abragenden Drehstifte 14B sind jeweils in plattenartig ausgebildete Stirnklappenhalter 18, 20 mit korrespondierend ausgebildeten Öffnungen für die einsetzende und drehbare Aufnahme der Drehstifte 14B eingesetzt.

Die Stirnklappenhalter 18, 20 bilden somit zusammen mit den vier Klappen 14 die Klappenanordnung. Jede Klappe weist an zumindest einem Stirnende ferner ein Klappenzahnrad 14C auf, welches in Einbaulage, also eingebaut in den Rahmen oder in ein Kühlergitter mit den angrenzenden Klappenzahnrädern 14C der angrenzenden Klappen 14 in Eingriff steht und somit die angrenzenden Klappen gegenläufig gegeneinander zwischen der in den Figuren 8 und 9 dargestellten Öffnungsstellung in die um 90° gedreht Schließstellung überführbar sind. Diese Ausführungsform bietet den Vorteil einer besonders schnellen und effizienten Verstellung auf sehr kompaktem Bauraum.

Figur 9 zeigt sodann eine Rahmen-Anordnungen umfassend insgesamt acht der in der Figur 8 dargestellten Klappenanordnungen in einer drei Klappenanordnungen breit und zwei Klappenanordnungen hohen Anordnung angeordnet in einem Modulrahmen 22 Figuren 10 bis 16 zeigen verschiedene Ansichten der Ausführungsform der Erfindung in der Ausführungsform "Dreifachklappen-Kulissenführung".

Figur 10 zeigt eine Frontansicht einer solchen Klappenanordnung in Öffnungsstellung, in welcher also die Mittelklappe 22 und die beiden diese außenseitig einfassenden Außenklappen 24 zusammengefaltet sind, wie dieses in der isometrischen Ansicht gemäß Figur 14 dargestellt ist. Die Klappenanordnung 20 ist in einem diese aufnehmenden, kastenartigen Rahmen 26 eingesetzt. In der vorliegenden Ausführungsform nimmt der Rahmen 26 zwei übereinander angeordnete Klappenanordnungen 20 auf und umfasst zwei seitliche Vertikalschenkel 26A, 26B, die über Horizontalstege 26C, 26D, 26I voneinander beabstandet sind.

Jede der Klappenanordnungen 20 umfasst jeweils eine Mittelklappe 22 und zwei außenseitig an Drehachsen 28, 30 drehbar mit diesen verbundenen Außenklappen 24 gleichen Aufbaus.

Die Mittelklappe 22 ist also nach Art eines Scharniers mit den Außenklappen 24 verbunden, wobei je ein Teil des Scharniers an der Mittelklappe 22 und der korrespondierende andere Teil an den Außenklappen ausgebildet ist. Hierzu sind auch diese Mittelklappe 22 und die Außenklappen 24 an den in Einbaulage anliegenden Klappenlängsseiten so komplementär ausgebildet, dass eine Stift-/Buchsenverbindung zur drehbaren Verbindung zwischen den Teilen ausgebildet ist. Vorliegend umfassen die beiden Klappenlängsseiten der Mittelklappe 22 zwei Schwenkstifte 22A, 22B, welche in entsprechende Buchsen 24A an den Außenklappen 24 eingreifen. Ferner können zwischen den Klappenlängsseiten entsprechend ausgebildete Anschläge ausgebildet sind, sodass zwischen den beiden angrenzenden Klappenlängsseiten der Mittelklappe 22 und den Außenklappen 24 ein Scharniergelenk ausgebildet ist, welches so ausgebildet ist, dass die Klappen in der in Fig. 15 dargestellten Öffnungsstellung möglichst nahe aneinander anliegen.

Die Mittelklappe 22 weist ferner mittig von den Klappenstirnenden und entlang der Drehachse der Mittelklappe 22 Rotationsstifte 22C, 22D auf, die über einen Aktuator betätigtbar, also drehbar und betätigbar ausgebildet sind und hierzu in entsprechenden Antriebslöcher in den Vertikalschenkeln 26A, 26B des Rahmens 26 sitzen. An dem außenseitigen, also von dem Ende der Drehachse 28,30 abgewandten Ende der Außenklappe 24 weist diese an den Klappenstirnenden abragende Führungsstifte 24A, 24B auf, welche in Einbaulage in korrespondierend ausgebildete und Kulissenführungen 26F, 26G des Rahmens verschieblich eingesetzt und in diesen geführt sind, die vorzugsweise bogen- oder kreissegmentförmig ausgebildet sind und somit bei der Drehung der Rotationsstifte 22C, 22D der Mittelklappe 22 eine seitliche Führung der Außenklappen 24 über diese Führungsstifte 24A, 24B in den Kulissenführungen 26F, 26G des Rahmens 26 realisieren.

Bei einer Drehung der Mittelklappe 22 aus der in Figur 11 dargestellten Öffnungsstellung nach unten, also gegen den Uhrzeigersinn, wird somit die oberhalb von der Mittelkappe 22 angeordnete Außenklappe 24 mit dem von der Mittelklappe 22 abgewandten Distalende durch die Führung der Führungsstifte 24A, 24B in den oberen Kulissenführungen 26F nach oben geführt / geklappt. Gleichzeitig wird die unterhalb der Mittelklappe 22 angeordnete Außenklappe 24 mit ihrem ebenfalls von der Mittelklappe abgewandten Distalende durch die Führung der Führungsstifte 24A, 24B in den unteren Kulissenführungen 26G nach unten geklappt. Somit wird in der geöffneten Schließstellung eine geschlossene Klappenwand aus mittiger Mittelklappe 22 und zwei Außenklappen 24 gebildet, die in der geöffneten Öffnungsstellung fast zu einer gemeinsamen Klappe zusammenlegbar sind, deren Klappenlängsseite sich dann möglichst rechtwinklig zur Fahrtrichtung und damit Windrichtung erstreckt, um einen möglichst geringen Luftwiderstand bereitzustellen.

Der Gegenstand der vorliegenden Erfindung ergibt sich nicht nur aus dem Gegenstand der einzelnen Patentansprüche, sondern aus der beanspruchten Kombination der einzelnen Patentansprüche untereinander. Alle in den Unterlagen - einschließlich der Zusammenfassung - offenbarten Angaben und Merkmale, insbesondere die in den Zeichnungen dargestellte räumliche Ausbildung werden als erfindungswesentlich beansprucht, soweit sie zum Rahmen der beanspruchten Erfindung gehören.

### Bezugszeichenliste

- L: Luftströmungsrichtung
- 2: Rahmen
- 2A, 2B: Vertikalstreben
- 2C, 2D: Horizontalstreben
- 2E, 2F: Horizontal-Langlöcher
- 2G, 2H, 2I, 2J: Vertikal-Langlöcher
- 4: Klappenanordnung
- 6: Teilklappe
- 6A: Doppelstift
- 6B: Mittelstift
- 6C, 6D: Außenstift
- 8: Teilklappe
- 8A: Lageröffnung
- 8B: Mittelstift
- 8C, 8D: Außenstift
- 12: Rahmen
- 6B: Mittelstift
- 10: Drehachse
- 12: Rahmen
- 14: Klappe
- 14A: Klappenfläche
- 14B: Drehstift
- 14C: Klappenzahnrad
- 16: Klappendrehachse
- 18, 20: Stirnklappenhalter
- 22: Modulrahmen
- 20: Klappenanordnungen
- 22: Mittelklappe
- 22A, 22B: Schwenkstift
- 22C, 22D: Rotationsstift
- 24: Außenklappen
- 24A, 24B: Führungsstift
- 24A: Buchse
- 26: Rahmen
- 26A, 26B: Vertikalschenkel
- 26C, 26D, 26E: Horizontalstrebe
- 26F, 26G: Kulissenführung
- 28, 30: Drehachse

## Patentansprüche

1. Luftführungssteuerung, die in eine Luftöffnung zur Steuerung von entlang einer Luftströmungsrichtung strömender Luft einsetzbar ist, mit einer verstellbare Klappen umfassenden Verschlussvorrichtung, einer verstellbare Klappen umfassende Verschlussvorrichtung, die zwischen einer die Luftöffnung freigebenden Öffnungsstellung und einer die Luftöffnung zumindest teilweise verschließenden Schließstellung mittels einer Verstellvorrichtung verstellbar sind zur selektiven Freigabe und zum Verschließen der Luftöffnung, wobei jede Klappe eine sich entlang einer Klappenlängsachse erstreckende Klappenfläche umfasst, welche durch diese begrenzende Klappenlängsseiten und Klappenstirnenden eingegrenzt ist, wobei die Klappenstirnenden kürzer ausgebildet sind als die Klappenenlängsseiten und wobei an den Klappenstirnenden beweglich in einen Rahmen (26) oder Fügepartner einsetzbare und kollinear angeordnete Stifte vorgesehen sind, **DADURCH GEKENNZEICHNET, DASS** die Verschlussvorrichtung eine Klappenanordnung (20) mit drei drehbar miteinander verbundenen Klappen umfassend eine mittig angeordnete Mittelklappe (22) und zwei diese einfassende Außenklappen (24) umfasst, dass die Klappendrehachse der Mittelklappe (22) sich durch deren Mitte der Klappenfläche der Mittelklappe erstreckt, dass sich die Stifte der Mittelklappe als Rotationsstifte (22C, 22D) koaxial zur mittigen Klappendrehachse der Mittelklappe (22) erstrecken, dass die Mittelklappe (22) an den Klappenlängsseiten drehbar mit den angrenzenden Klappenlängsseiten der Außenklappen (24)verbunden ist, dass die Stifte der Außenklappen (24) als Führungsstifte (24A, 24B) ausgebildet sind, die nach außen versetzt von der Mittellinie der Mittelklappe von den Klappenstirnseiten der Außenklappen (24) abragen , dass die Klappendrehachse der Rotationsstifte (22C, 22D) antreibbar ausgebildet sind, und dass die Führungsstifte (24A, 24B) der Außenklappen (24)in Kulissenführungen (24F, 24G) des Rahmens (26) oder einer in den Rahmen einsetzbaren Halteanordnung verschieblich geführt sind.

2. Luftführungssteuerung nach Anspruch 2, **DADURCH GEKENNZEICHNET, DASS** die Kulissenführungen (24F, 24G) bogenförmig ausgebildet sind.

3. Luftführungssteuerung nach Anspruch 1 oder 2, **DADURCH GEKENNZEICHNET, DASS** an den Klappenlängsseiten der Mittelklappe (22) ein erster Teil eines Scharniers ausgebildet ist und dass an einer an die Mittelklappe (22) angrenzenden - proximalen - Klappenlängsseite der Außenklappe (24) der komplementäre andere Teil des Scharniers ausgebildet ist.

4. Luftführungssteuerung nach Anspruch 3, **DADURCH GEKENNZEICHNET, DASS** das Scharnier einen Schwenkstift (22A, 22B) und eine Buchse (24A) umfasst.

5. Luftführungssteuerung nach einem der vorhergehenden Ansprüche, **DADURCH GEKENNZEICHNET, DASS** die Klappen (14) der Klappenanordnung in Stirnklappenhalter (18 ,20) eingesetzt sind, die in den Rahmen (26) einsetzbar sind.

6. Luftführungssteuerung nach einem der vorhergehenden Ansprüche, **DADURCH GEKENNZEICHNET, DASS** diese einen Rahmen (2; 26) umfasst.

7. Luftführungssteuerung nach einem der vorhergehenden Ansprüche, **DADURCH GEKENNZEICHNET, DASS** der Rahmen (2; 26) Bestandteil eines Kühlergitters ist.

8. Luftführungssteuerung nach einem der vorhergehenden Ansprüche, **DADURCH GEKENNZEICHNET, DASS** diese aus Kunststoff besteht.

9. Kühlergitter umfassend mindestens eine Luftführungssteuerung nach einem der vorhergehenden Ansprüche.

10. Kraftfahrzeug-Baugruppe umfassend die Luftführungssteuerung nach einem der Ansprüche 1 bis 9 sowie einen Kühler, wobei die Luftführungssteuerung einen Luftstrom zu dem Kühler reguliert.

## Claims

1. Air flow control which can be inserted into an air opening for controlling air flowing along an air flow direction, having a closure device comprising adjustable flaps, a closure device comprising adjustable flaps which can be adjusted between an open position releasing the air opening and a closed position at least partially closing the air opening by means of an adjustment device for selectively releasing and closing the air opening, wherein each flap comprises a flap surface extending along a flap longitudinal axis, which is delimited by flap longitudinal sides and flap end faces limiting the flap surface, wherein the flap end faces are formed shorter than the flap longitudinal sides and wherein pins are provided at the flap end faces, which can be inserted movably into a frame (26) or joining partner and are arranged collinearly, **CHARACTERIZED IN THAT** THAT the closure device comprises a flap arrangement (20) with three flaps rotatably connected to each other comprising a centrally arranged middle flap (22) and two outer flaps (24) enclosing the middle flap, that the flap axis of rotation of the middle flap (22) extends through the center of the flap surface of the middle flap, that the pins of the center flap extend as rotation pins (22C, 22D) coaxially to the center flap rotation axis of the center flap (22), that the center flap (22) is rotatably connected at the flap longitudinal sides with the adjacent flap longitudinal sides of the outer flaps (24), **in that** the pins of the outer flaps (24) are designed as guide pins (24A, 24B) which project outwardly offset from the center line of the center flap from the flap end faces of the outer flaps (24), **in that** the flap rotation axis of the rotation pins (22C, 22D) are designed to be drivable, and **in that** the guide pins (24A, 24B) of the outer flaps (24) are displaceably guided in channel guides (24F, 24G) of the frame (26) or of a holding arrangement insertable into the frame.

2. Air flow control of claim 2, **CHARACTERIZED IN THAT** the channel guides (24F, 24G) are arcuate in shape.

3. Air flow control according to claim 1 or 2, **CHARACTERIZED IN THAT** a first part of a hinge is formed at the flap longitudinal sides of the center flap (22) and that the complementary other part of the hinge is formed at a - proximal - flap longitudinal side of the outer flap (24) adjacent to the center flap (22).

4. Air flow control of claim 3, **CHARACTERIZED IN THAT** the hinge comprises a pivot pin (22A, 22B) and a bushing (24A) .

5. Air flow guide control according to any one of the preceding claims, **CHARACTERIZED IN THAT** the flaps (14) of the flap assembly are inserted into end flap holders (18 ,20) insertable into the frame (26).

6. Air flow control according to any one of the preceding claims, **CHARACTERIZED IN THAT** it comprises a frame (2; 26) .

7. Air flow control according to any one of the preceding claims, **CHARACTERIZED IN THAT** the frame (2; 26) is part of a radiator grille.

8. Air flow control according to any one of the preceding claims, **CHARACTERIZED IN THAT** it is made of plastic.

9. A radiator grille comprising at least one airflow control according to any one of the preceding claims.

10. An automotive vehicle assembly comprising the airflow control of any one of claims 1 to 9 and a radiator, wherein the airflow control regulates an airflow to the radiator.

## Revendications

1. Dispositif de commande de guidage d'air, susceptible d'être inséré dans un orifice d'air pour commander l'air circulant le long d'une direction de circulation d'air, comprenant un organe d'obturation pourvu de volets réglables qui sont réglables entre une position d'ouverture, libérant l'orifice d'air, et une position de fermeture, refermant au moins partiellement l'orifice d'air, au moyen d'un organe de réglage afin de libérer et refermer sélectivement l'orifice d'air,
dans lequel
chaque volet présente une surface de volet qui s'étend le long d'un axe longitudinal du volet et qui est définie par des côtés longitudinaux de volet et par des extrémités frontales de volet, délimitant ladite surface,
les extrémités frontales de volet sont réalisées plus courtes que les côtés longitudinaux de volet, et
des tiges susceptibles d'être insérées de manière mobile dans un cadre (26) ou dans une pièce d'assemblage correspondante et disposées de manière colinéaire sont prévues aux extrémités frontales de volet,
**caractérisé en ce que**
l'organe d'obturation comprend un ensemble de volets (20) avec trois volets reliés entre eux de manière rotative, comprenant un volet central (22) disposé au centre et deux volets extérieurs (24) entourant celui-ci,
**en ce que** l'axe de rotation du volet central (22) passe par le centre de la surface du volet central,
**en ce que** les tiges du volet central s'étendent en tant que tiges de rotation (22C, 22D) coaxialement à l'axe de rotation central du volet central (22),
**en ce que**, au niveau des côtés longitudinaux de volet, le volet central (22) est relié de manière rotative aux côtés longitudinaux adjacents des volets extérieurs (24),
**en ce que** les tiges des volets extérieurs (24) sont réalisées sous forme de tiges de guidage (24A, 24B) qui dépassent des côtés frontaux des volets extérieurs (24) en étant décalées vers l'extérieur par rapport à la ligne médiane du volet central,
**en ce que** les axes de rotation de volet des tiges de rotation (22C, 22D) sont conçus de manière à pouvoir être entraînés, et
**en ce que** les tiges de guidage (24A, 24B) des volets extérieurs (24) sont guidées de manière coulissante dans des guides à coulisse (24F, 24G) du cadre (26) ou d'un ensemble de retenue susceptible d'être inséré dans le cadre.

2. Dispositif de commande de guidage d'air selon la revendication 1,
**caractérisé en ce que** les guides à coulisse (24F, 24G) sont réalisés en forme d'arc.

3. Dispositif de commande de guidage d'air selon la revendication 1 ou 2,
**caractérisé en ce qu'**une première partie d'une charnière est réalisée sur les côtés longitudinaux du volet central (22), et l'autre partie complémentaire de la charnière est réalisée sur un côté longitudinal, proximal, adjacent au volet central (22), du volet extérieur (24).

4. Dispositif de commande de guidage d'air selon la revendication 3,
**caractérisé en ce que** la charnière comprend une tige de pivotement (22A, 22B) et une douille (24A).

5. Dispositif de commande de guidage d'air selon l'une des revendications précédentes,
**caractérisé en ce que** les volets (14) de l'ensemble de volets sont insérés dans des supports de volets frontaux (18, 20) qui peuvent être insérés dans le cadre (26).

6. Dispositif de commande de guidage d'air selon l'une des revendications précédentes,
**caractérisé en ce que** celui-ci comprend un cadre (2 ; 26).

7. Dispositif de commande de guidage d'air selon l'une des revendications précédentes,
**caractérisé en ce que** le cadre (2 ; 26) fait partie d'une grille de radiateur.

8. Dispositif de commande de guidage d'air selon l'une des revendications précédentes,
**caractérisé en ce que** celui-ci est constitué en matière plastique.

9. Grille de radiateur comprenant au moins un dispositif de commande de guidage d'air selon l'une des revendications précédentes.

10. Ensemble structurel de véhicule automobile, comprenant le dispositif de commande de guidage d'air selon l'une des revendications 1 à 9 et un radiateur, le dispositif de commande de guidage d'air régulant un flux d'air vers le radiateur.
